# EUROPEAN PATENT SPECIFICATION

(11) **EP 3 230 432 B1**
(45) Date of publication and mention of the grant of the patent: **24.10.2018**
(21) Application number: 15825787.3
(22) Date of filing: 01.12.2015
(51) Int. Cl.: C12G 3/08, C12G 3/06

(54) **PROCESSING OF WINE RAW MATERIAL**
VERARBEITUNG VON WEINROHMATERIAL
TRAITEMENT DE MATIÈRE PREMIÈRE DE VIN

(30) Priority: 12.12.2014 CZ 20140900
(43) Date of publication of application: 18.10.2017
(73) Proprietor: Modelárna Liaz, spol. s.r.o., 460 06 Liberec (CZ)
(72) Inventor: JIRICNY, Vladimir, 148 00 Praha 4 (CZ); KRISTAL, Jiri, 130 00 Praha 3 (CZ); STAVÁREK, Petr, 744 01 Frenstát pod Radhostem (CZ); PRAZMA, Vojtech, 460 15 Liberec XV (CZ)
(74) Representative: PATENTSERVIS Praha, a.s.
(86) International application number: PCT/CZ2015/000144
(87) International publication number: WO 2016/091229

(56) References cited:
- WO-A2-2011/088809
- CZ-A3- 20 100 618
- US-A- 4 468 407
- Pierre-Louis Coordinator ET AL: "Alcohol level reduction in wine", , 1 January 2013 (2013-01-01), XP055253511, Retrieved from the Internet: URL:http://www.fondationtest.univ-bordeaux .fr/sites/default/files/pdf/2013-09-06-oen oviti-revue.pdf#page=86 [retrieved on 2016-02-26]
- GARY J. PICKERING: "Low- and Reduced-alcohol Wine: A Review", JOURNAL OF WINE RESEARCH, vol. 11, no. 2, 1 July 2000 (2000-07-01), pages 129-144, XP055116982, ISSN: 0957-1264, DOI: 10.1080/09571260020001575

## Description

### Field of the invention

Technical solution relates to the processing of wine raw material for the preparation of beverages with different alcohol levels, particularly the non-alcoholic and low-alcoholic wine, where it is necessary to lower the alcohol level in the final product and at the same time to keep the level of other volatile and non-volatile aromatic compounds contained in the original wine raw material.

### Background of the invention

State of the art uses a number of production methods for different concentrated spirits and liquors, which at given production stage utilize the distillation of diluted fermented material. Distillation of such material yields the individual fractions, some of which are enriched with the higher alcohol levels, or possibly essences. Distillation at lowered pressure enables the preservation of the higher amount of the volatile organic natural compounds in the concentrated distillate.

Solution according the document CS 214620 B1 enables to obtain the very flavor-interesting concentrated alcoholic beverages by the freezing method. In this case, the solution consists of the multi-step freezing so that the original product is cooled down in several steps with the removal of the ice phase in each step. In this way, it is possible to obtain the required concentration of alcoholic beverage with the use of raw material in a form of wine or similar clear fermentation products. In this solution, the water is freezed out while the solid (ice) phase is at each temperature in the equilibrium with the liquid phase. The determining factor for the ratio between the solid and liquid phase of freezing wine is primarily the ethanol level; the content of sugar and other soluble compound is affecting this ratio only in lesser extent. After reaching the required temperature below zero the cooling is stopped and the liquid phase is separated from the solid (ice) phase by decantation, filtration, spin-drying, etc.

Another document dealing with the method for obtaining of several fractions with quantitatively different alcohol levels by change of temperature (state) is a Czech patent application PV 2010-618 A3. In this solution, the starting alcoholic beverage is frozen in the freezing equipment and several fractions with quantitatively different alcohol levels are obtained by the non-stationary or stationary melting and collection of the individual fractions of the melting liquid. In the Example 3, one fraction reached the concentration of alcohol of 0.5%.

Finally, the document in which the freezing is used to obtain the alcohol-free wine with the maximum alcohol level of 0.5% is the international patent application WO 2011/088809.

In relation to the obtaining beverages with the low alcohol level, it is possible to mention also a document DE 3024055 A, which present the removal of alcohol from the alcoholic beverages (e.g. wine or beer) based on the application of the beverage in to the pressure vessel, injection of liquid or gaseous carbon dioxide into this vessel, intensive mixing, removal of carbon dioxide with dissolved ethanol and other volatile compounds, expansion of carbon dioxide for the release of ethanol and volatile compounds.

### Summary of the invention

During the processing the wine raw material for the preparation of beverages with the different alcohol levels, particularly the non-alcoholic and low alcoholic wine, it is necessary to lower the alcohol level in the final product and at the same time to keep the level of other volatile and non-volatile aromatic compounds contained in the original wine raw material, which affects the aroma and flavor of the final product.

Presented solution combines two separation methods, the freezing for the separation of the non-volatile compounds and the desorption by inert gas for the separation of the volatile aromatic compounds and alcohol from the wine raw material, particularly the aromatic compounds determining the aroma and flavor of the final products, and the subsequent blending of obtained fractions for the preparation of beverages with the required parameters. By utilization of this solution combining two separation methods, freezing and desorption by inert gas, it is possible to prepare the non-alcoholic (<0.5% vol. alc.) and low alcoholic (<5% vol. alc.) beverages with the content of non-volatile and volatile aromatic compounds comparable to their content in the original wine raw material, which is not possible by the individual utilization of the given methods. By utilization of this solution it is possible to prepare also alcoholic beverages with alcohol levels higher than 5% vol. Similar effect can be achieved by the combination of freezing method with the vacuum distillation or other separation method for the separation of the volatile aromatic compounds and alcohol.

Presented solution represents the flexible method for production of several products (beverages) with different levels of the aromatic compounds and alcohol, which are determined for distribution after mutual blending, blending with other allowed additives with almost 100% use of the raw material. Presented solution has the optimized unit energy consumption that is lower than for the individual utilization of the given methods.

The raw material 1 for the presented technical solution is wine or similar alcoholic beverage, referenced to as the wine raw material, see the presented scheme of technological solution of preparation of beverages with different alcohol levels.

The first separation method leading to the separation of the non-volatile compounds is the freezing 2 of the original wine raw material down to -10°C or lower, at which the mixture of ice and liquid phase is formed. The formed mixture is separated to the ice water fraction **4** and liquid alcohol fraction **5** by the spin-drying, filtration, or other separation technique **3**. Ice water fraction **4** contains water with a low level of non-volatile aromatic compounds. Liquid alcohol fraction **5** contains less than 25% vol. alc. and higher concentration of the aromatic compounds. The level of alcohol in the liquid alcohol fraction **5** depends on the utilized temperature of freezing. Freezing is carried out either by the fast freezing when the wine is frozen at one step down to final temperature of -10°C or lower, or by the equilibrium freezing when the temperature different between the liquid and the forming ice is kept at or below 1°C by the gradual liquid cooling with the gradient approx. -1°C per hour down to final temperature of -10°C or lower. During the equilibrium freezing the ice crystals are formed slowly and so the trapping of the alcohol inside the ice crystals volume is minimized.

Spin-drying of the mixture of ice and liquid alcohol fraction yields the ice water fraction **4** with the alcohol level below 0.5% vol. with a minimum level of the volatile aromatic compounds and the level of the non-volatile aromatic compounds decreased below 30% of their content in the original wine raw material. After melting, the ice water fraction **4** is used in subsequent steps of the technical solution. The spin-dried liquid alcohol fraction **5** has the alcohol level higher than the original raw material (e.g. as fortified wine or similar alcoholic beverage) between 15 and 25% vol. alc. and the level of the non-volatile compounds is increased above 100% of their content in the original wine raw material. In case of the equilibrium freezing, the alcohol level in the spin-dried liquid alcohol fraction **5** is higher and in the ice water fraction **4** lower than in case of the fast freezing.

The second separation method leading to the separation of the volatile aromatic compounds is the desorption **7** of volatile compound by the inert gas. The inert gas, profitably nitrogen, at the temperature up to 20°C is contacted with the input liquid containing up to 25% vol. of alcohol at the temperature up to 20°C or lower by bubbling through the volume of liquid, or by dispersing the liquid into the stream of flowing inert gas or other contacting method. The input liquid represents the original wine raw material **1** or the liquid alcohol fraction **5** formed by the freezing process **2**, entering the process of desorption **7** by the inert gas. During the contacting with the input liquid **1**, **5** the gas is saturated with vapors of volatile compounds of the input liquid **1**, **5** (volatile aromatic compounds, alcohol, water) . The contacting of the input liquid **1**, **5** with gas is realized at atmospheric or lowered pressure. During the subsequent fractional condensation, the inert gas fraction **9** saturated with the volatile compounds is cooled down in several steps **12, 15, 17** with different temperatures, where the vapors of the aromatic compounds, alcohol and water condense and form fractions **11, 14, 16** with different concentration of these components corresponding to the gas-liquid equilibrium. The level of the non-volatile compound in the fractions from the fractional condensation is zero. These fractions **11**, **14**, **16** containing alcohol and aromatic compounds from the original raw material **1** are further used in the subsequent steps of the presented solution or prepared for distribution. The number of cooling steps **12, 15, 17** of fractional condensation is two or more; the temperatures in the individual cooling steps **12, 15, 17** decrease and are between -30°C and 20°C, while temperature in the first cooling step **12** is the highest and temperature in the last cooling step **17** is the lowest. The liquid fraction **8** after the desorption by inert gas **7** contains less than 25% vol. alc. and the content of the non-volatile compound is more than 100% of their content in the input raw material **1.**

The last step of the presented solution is the blending **10** of the liquid fraction obtained by freezing **2** and desorption **7** by inert gas, e.g. the melted ice fraction **4,** liquid fraction **8** after desorption and one or more fractions **11**, **14**, **16** from fractional condensation. Blending of the suitable ratio of given fractions **4, 8**, **11, 14**, **16** produces beverages **19** with the required levels of alcohol and non-volatile and volatile aromatic compounds, e.g. non-alcoholic beverage with alcohol level below 0.5% vol. and low alcoholic beverage with alcohol level below 5% vol. Adding the ice water fraction **4** from freezing it can yield the level of non-volatile compounds corresponding to the input raw material **1** (wine). Adding the aromatic compounds **11, 14**, **16** obtained from the input raw material **1** into beverages **19** can yield the emphasized aroma and flavor corresponding to the original raw material (wine).

The liquid alcohol fraction **5** from the freezing method **2** followed by the spin-drying **3** directly yields a beverage **6** with the alcohol level lower than 25% vol. Separate blending of the aromatic fractions **11, 14, 16,** obtained by the desorption by the inert gas followed by the fractional condensation directly yields beverages with the alcohol level above 20% vol.

All produced beverages with different levels of alcohol and aromatic compounds are suitable for direct consumption or for additional blending with water and other additives **13.**

Presented solution synergicaly combining the methods of freezing and desorption by inert gas provides the benefit of the better energy utilization and smaller energy consumption by combination of processes with different heat requirements (heating, cooling). The result of the energy management optimization is the lower unit energy consumption resulting from the utilization of the excessive heat generated with the freezing equipment operation for the thermostating of the liquid and inert gas entering the desorption process. Heat (cold) accumulated in the freezing products, i.e. in the ice water fraction **4** and liquid alcohol fraction **5**, is utilized for the fractional condensation of the volatile compound vapors contained in the inert gas, and for precooling of the raw material **1** entering the freezing process **2.**

For the further lowering of the operating costs, the dry inert gas after the last step of the fractional condensation **18** is recycled back to the input of desorption **7**.

The production ratio of the different beverages with different alcohols levels (e.g. <0.5% vol., 0.5 to 5% vol., 5 to 17% vol., 17 to 28% vol. and >28% vol.) can be controlled in relation to the composition of the input raw material by the following:
- By the raw material volume entering the process of freezing and desorption with inert gas
- By the freezing temperature during the one- or multi-step freezing (preferably the equilibrium freezing)
- By the temperature profile in the cooler cascade for the fractional condensation of the volatile compound vapors after the desorption column.

### Brief description of the drawings

Presented drawing clarifies the claimed technical solution for the preparation of beverages with the different alcohol levels (detailed description is mentioned in the chapter Principles of technical solution).

### Examples of technical solution

### Example 1

1.39 kg of wine was frozen to temperature -20°C. Obtained mixture of ice (ice water fraction) and liquid alcohol fraction was separated in the spin-dryer yielding 0.74 kg of ice and 0.652 kg of liquid. Liquid alcohol fraction and ice water fraction differed in composition, i.e. levels of alcohol, non-volatile (e.g. sugars, extract, acids) and volatile aromatic compounds (Table 1).

**Table 1**

| | original wine | | ice water fraction | | liquid alcohol fraction | |
|---|---|---|---|---|---|---|
| alcohol | 12.41 | %vol . | 0.33 | %vol . | 22.8 | %vol. |
| sugars | 1.2 | g/l | 0 | g/l | 2.3 | g/l |
| extract | 20.3 | g/l | 5.9 | g/l | 33.0 | g/l |
| acids | 0.53 | g/l | 0.16 | g/l | 0.86 | g/l |
| volatile aromatic compounds | 0.99 | g/l | 0.1 | g/l | 1.80 | g/l |

2.21 kg of wine at temperature 19°C was thoroughly bubbled with nitrogen. Nitrogen saturated with the volatile compound vapors was fractionally condensed in two steps at temperatures 1°C and -25°C. Two fraction containing the aromatic compounds, and a liquid fraction were obtained; first fraction (aromatic compounds 1) weighted 0.651 kg, second fraction (aromatic compounds 2) weighted 0.210 kg, liquid fraction weighted 1.350 kg. Individual fractions and liquid fraction differed in composition, i.e. levels of alcohol, non-volatile (e.g. sugars, extract, acids) and volatile aromatic compounds (Table 2).

**Table 2**

| | aromatic compounds 1 | | aromatic compounds 2 | | liquid fraction from desorption | |
|---|---|---|---|---|---|---|
| alcohol | 3.5 | %vol . | 30 | %vol . | 0 | %vol. |
| sugars | 0 | g/l | 0 | g/l | 1.6 | g/l |
| extract | 0 | g/l | 0 | g/l | 39. 3 | g/l |
| acids | 0 | g/l | 0 | g/l | 0.8 1 | g/l |
| volatile aromatic compounds | 3.1 | g/l | 0.63 | g/l | 0.1 | g/l |

The blending of the melted ice water fraction, the liquid fraction from desorption and the first fraction (aromatic compounds 1) from the fractional condensation in the given ratio (Table 3) yielded a product containing 0.48 % vol. of alcohol (non-alcoholic wine) with weight of 2.09 kg, i.e. 58 % wt. of the raw material entering the freezing and desorption by inert gas.

**Table 3**

| | ice water fraction | | liquid fraction from desorption | | aromatic compounds 1 | | product | |
|---|---|---|---|---|---|---|---|---|
| weight | 0.735 | kg | 1.243 | kg | 0.115 | kg | 2.093 | kg |
| alcohol | 0.33 | %vol | 0 | %vol . | 3.5 | %vol. | 0.48 | %vol. |
| sugars | 0 | g/l | 1.6 | g/l | 0 | g/l | 0.95 | g/l |
| extract | 5.9 | g/l | 39.3 | g/l | 0 | g/l | 25.4 | g/l |
| acids | 0.16 | g/l | 0.81 | g/l | 0 | g/l | 0.54 | g/l |
| volatile aromatic compounds | 0.1 | g/l | 0.1 | g/l | 3.1 | g/l | 0.43 | g/l |

### Example 2

1.95 kg of wine was frozen to temperature -20°C. Obtained mixture of ice and liquid alcohol fraction was separated in the spin-dryer yielding 1.086 kg of ice and 0.864 kg of liquid. Liquid alcohol fraction and ice water fraction differed in composition, i.e. levels of alcohol, non-volatile (e.g. sugars, extract, acids) and volatile aromatic compounds (Table 4).

**Table 4**

| | original wine | | ice water fraction | | liquid alcohol fraction | |
|---|---|---|---|---|---|---|
| alcohol | 12.41 | %vol . | 0.40 | %vol . | 21.72 | %vol . |
| sugars | 1.2 | g/l | 0 | g/l | 2.2 | g/l |
| extract | 20.3 | g/l | 6.4 | g/l | 31.4 | g/l |
| acids | 0.53 | g/l | 0 . 06 | g/l | 0.90 | g/l |
| volatile aromatic compounds | 0.99 | g/l | 0.12 | g/l | 1.7 | g/l |

0.729 kg of the liquid alcohol fraction from freezing, with alcohol level of 19.55 % vol. and temperature 18.5°C, was thoroughly bubbled with nitrogen. Nitrogen saturated with the volatile compound vapors was fractionally condensed in two steps at temperatures 1°C and -25°C. Two fraction containing the aromatic compounds, and a liquid fraction were obtained; first fraction (aromatic compounds 1) weighted 0.198 kg, second fraction (aromatic compounds 2) weighted 0.109 kg, liquid fraction weighted 0.422 kg. Individual fractions and liquid fraction differed in composition, i.e. levels of alcohol, non-volatile (e.g. sugars, extract, acids) and volatile aromatic compounds (Table 5).

**Table 5**

| | aromatic compounds 1 | | aromatic compounds 2 | | liquid fraction from desorption | |
|---|---|---|---|---|---|---|
| alcohol | 36.4 | %vol . | 59.0 | %vol | 0 | %vol. |
| sugars | 0 | g/l | 0 | g/l | 2.6 | g/l |
| extract | 0 | g/l | 0 | g/l | 52.1 | g/l |
| acids | 0 | g/l | 0 | g/l | 1.48 | g/l |
| volatile aromatic compounds | 5.5 | g/l | 1. 92 | g/l | 0.1 | g/l |

The blending of the melted ice water fraction, the liquid fraction from desorption and the first fraction from the fractional condensation (aromatic compounds 1) in the given ratio (Table 6) yielded a product containing 4.93 % vol. of alcohol (low alcoholic wine) with weight of 1.155 kg.

**Table 6**

| | ice water fraction | | liquid fraction from desorption | | aromatic comounds 1 | | product | |
|---|---|---|---|---|---|---|---|---|
| weight | 0.592 | kg | 0.422 | kg | 0.141 | kg | 1.155 | kg |
| alcohol | 0.4 | %vol . | 0 | %vol . | 36.4 | %vol | 4.93 | %vo 1. |
| sugars | 0 | g/l | 2.6 | g/l | 0 | g/l | 0.95 | g/l |
| extract | 6.4 | g/l | 52.1 | g/l | 0 | g/l | 22.3 | g/l |
| acids | 0.06 | g/l | 1.48 | g/l | 0 | g/l | 0.57 | g/l |
| volatile aromatic compounds | 0.12 | g/l | 0.1 | g/l | 5.5 | g/l | 0.77 | g/l |

Blending of part of the melted ice water fraction and the first fraction from the fractional condensation (aromatic compounds 1), remaining after the preparation of low alcoholic wine, in the given ratio (Table 7) yielded a product containing 27.8 % vol. of alcohol (liquor) with weight of 0.08 kg.

**Table 7**

| | ice water fraction | | aromatic compounds 1 | | product | |
|---|---|---|---|---|---|---|
| weight | 0.023 | kg | 0.057 | kg | 0.080 | kg |
| alcohol | 0.4 | %vol . | 36.4 | %vol . | 27.8 | %vol . |
| sugars | 0 | g/l | 0 | g/l | 0 | g/l |
| extract | 6.4 | g/l | 0 | g/l | 1.8 , | g/l |
| acids | 0.06 | g/l | 0 | g/l | 0.02 | g/l |
| volatile aromatic compounds | 0.12 | g/l | 5.5 | g/l | 4.0 | g/l |

Blending of part of the melted ice water fraction and the second fraction from the fractional condensation (aromatic compounds 1), remaining after the preparation of low alcoholic wine and liquor, in the given ratio (Table 8) yielded a product containing 39.2 % vol. of alcohol (spirits) with weight of 0.187 kg.

**Table 8**

| | ice water fraction | | aromatic compounds 2 | | product | |
|---|---|---|---|---|---|---|
| weight | 0.078 | kg | 0.109 | kg | 0.187 | kg |
| alcohol | 0.4 | %obj | 59 | %obj | 39.2 | %obj |
| sugars | 0 | g/l | 0 | g/l | 0 | g/l |
| extract | 6.4 | g/l | 0 | g/l | 2.7 | g/l |
| acids | 0.06 | g/l | 0 | g/l | 0.03 | g/l |
| volatile aromatic compounds | 0.12 | g/l | 1. 92 | g/l | 1.2 | g/l |

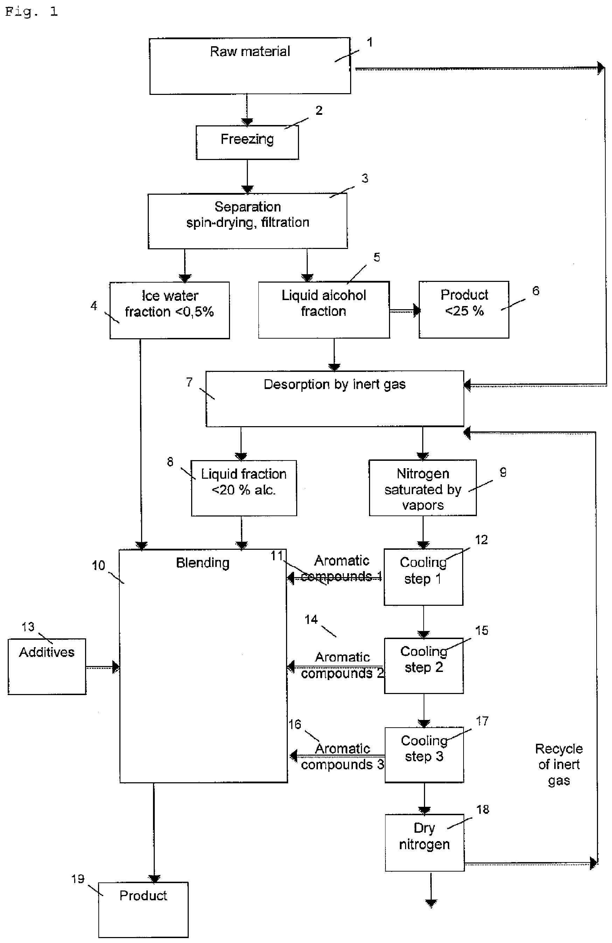

## Claims

1. A process for preparation of beverages with different alcohol levels, **characterized in that** it consists in the combination of separation method of freezing **2** for separation of the non-volatile compounds, and method of desorption **7** by inert gas for separation of the volatile aromatic compounds and alcohol from the input wine raw material **1**, with the consequent blending **10** of obtained fractions for preparation of beverages **19** with required parameters of levels of alcohol and content of non-volatile and volatile aromatic compounds.

2. A process for preparation of beverages with different alcohol levels, according to Claim 1, **characterized in that** it consists **in that** the separation method of freezing **2** occurs at temperature -10°C or lower, where the input wine raw material **1** yields a mixture of ice water fraction **4** with content of the non-volatile compound lower that 30 % of their content in the input wine raw material, and the liquid alcohol fraction **5,** which is separated by the spin-drying, filtration or other similar technique **3**.

3. A process for preparation of beverages with different alcohol levels, according to Claim 1, **characterized in that** it consists **in that** the separation method of desorption by inert gas occurs at temperature up to 20°C, where the inert gas is contacted with the input liquid with alcohol level up to 25 % vol., where this input liquid is the input wine raw material **1** or the liquid alcohol fraction **5** exiting the separation method of freezing **2.**

4. A process for preparation of beverages with different alcohol levels, according to Claim 1 or 2, **characterized in that** it consists **in that** the separation method of freezing **2** includes the fast one-step freezing down to final temperature -10°C or lower, or the equilibrium freezing, in which the temperature difference between the liquid and forming ice is kept at 1°C by gradual cooling of liquid with temperature gradient approx. -1°C per hour down to final temperature -10°C or lower.

5. A process for preparation of beverages with different alcohol levels, according to Claim 1 or 3, **characterized in that** it consists **in that** the separation method of desorption **7** by inert gas includes bubbling through the liquid volume or dispersing of the input liquid **1**, **5** into the stream of inert gas yielding the inert gas fraction **9** saturated with the volatile compound vapors from the input liquid **1**, **5**, where these volatile compounds represent the aromatic compounds, alcohol, and water, and the liquid fractions **8**, while during the consequent fractional condensation the inert gas fraction **9** saturated with the volatile compound vapors is cooled in several steps **12, 15, 17** with different temperatures yielding at least two fractions **11, 14, 16** with different concentration of the volatile compounds.

6. A process for preparation of beverages with different alcohol levels, according to Claim 1 to 5, **characterized in that** it consists in blending **10** of obtained fractions realized by mixing the suitable ratio of liquid fractions obtained from freezing **2** and desorption **7** by inert gas, yielding the beverages with different levels of alcohol and non-volatile and volatile aromatic compounds.

7. A process for preparation of beverages with different alcohol levels, according to Claim 6, **characterized in that** it consists **in that** the obtained beverage **19** is the non-alcoholic beverage with the alcohol level below 0.5 % vol., or low alcoholic beverage with the alcohol level below 5 % vol., or alcoholic beverage with the alcohol level below 25 % vol., or alcoholic beverage with the alcohol level above 25 % vol.

## Patentansprüche

1. Verfahren zur Verarbeitung des Weinrohstoffes für die Produktion von Getränken mit verschiedenen Alkoholgehalten, **dadurch gezeichnet, dass** die Separationsmethode des Ausfrierens (2) für die Separation der nichtflüchtigen stoffe, und die Methode der Separation von flüchtigen aromatischen Stoffen aus dern Eingangsweinrohsloff (1) durch Desorption (7) mit Inertgas kombiniert werden, wobei zur Gewinnung der Getränke (19) mit geforderten Gehalten von Alkohol und den nichtflüchtigen und flüchtigen aromatischen Stoffen die Mischung (10) der gewonnenen Fraktionen verwendet wird.

2. Verfahren zur Produktion von Getränken mit verschiedenen Alkoholgehalten nach Anspruch 1, **dadurch gezeichnet, dass** die Separationsmethode des Ausfrierens (2) bei der Temperatur -10°C oder bei niedrigeren Temperatur durchgeführt wird, wobei aus dem Eingangsweinrohstoff (1) eine Mischung einer eisigen Wasserfraktion (4), in der das Gehalt der nichtflüchtigen Stoffe unter 30% des Gehalts dieser Stoffe in dern Eingangsweinrohstoff (1) liegt, und einer alkoholischen Fraktion (5), die mit Zentrifugieren, Filtration, oder mit einer anderen ähnlichen Technik abgetrennt werden. (3).

3. Verfahren zur Produktion von Getränken mit verschiedenen Alkoholgehalten nach Anspruch 1, **dadurch gezeichnet, dass** die Methode der Separation durch Desorption mit Inertgas (7) bei der Temperatur höchstens 20 °C durchgeführt wird, wobei das Inertgas in Kontakt mit der Eintrittsflüssigkeit mit höchstens 25 % Alkohol gebracht wird, und wobei diese Eintrittsflüssigkeit der Eingangsweinrohstoff (1) oder die aus der Separationsmethode des Ausfrierens (2) austretende flüssige alkoholische Fraktion (5) sind.

4. Verfahren zur Produktion von Getränken mit verschiedenen Alkoholgehalten nach Anspruch 1 oder 2, **dadurch gezeichnet, dass** die Separationsmethode des Ausfrierens (2) entweder ein schnelles Einfrieren zur Endtemperatur von .-10 °C oder zu einer niedrigerer Temperatur, oder ein gleichgewichtiges Ausfrieren durch allmähliche Abkühlung der Flüssigkeit, bei dem der Unterschied der Temperaturen der Flüssigkeit und des sich bildenden Eises auf einem Wert maximal 1 °C gehalten wird, zur Endtemperatur von -10 °C oder zu einer niedrigerer Temperatur, einschließt.

5. Verfahren zur Produktion von Getränken mit verschiedenen Alkoholgehalten nach Anspruch 1 oder 3, **dadurch gezeichnet dass** die Methode der Separation durch Desorption mit Inertgas (7) einschließt die Gewinnung der mit den Dämpfen der flüchtigen Stoffe der Eintrittsflüssigkeit (1,5) gesättigter Fraktion des Inertgases (9) durch Brodeln der Eintrittsflüssigkeit (1,5) mit Strom des Inertgases, oder durch Zerstreuen der Eintrittsflüssigkeit (1,5) in dem Inertgas, in der die flüchtigen Stoffe aromatische Stoffe., Alkohol und Wasser sind, und einer flüssigen Fraktion (8), wobei bei der folgenden Fraktionskondensation diese mit den Dämpfen von flüchtigen Stoffen gesättigte Fraktion des Inertgases (9) in einigen Stufen (12, 15, 17) mit verschiedenen Temperaturen gekühlt ist, und dabei wenigstens zwei Fraktionen (11, 14, 16) mit unterschiedlichen Konzentrationen der flüchtigen Stoffe entstehen.

6. Verfahren zur Produktion von Getränken mit verschiedenen Alkoholgehalten nach irgendeinern der Ansprüche 1 bis 5, **dadurch gezeichnet, dass** die Mischung (10) der gewonnen Fraktionen durch Vermischen der durch Einfrieren (2) und Desorption (7) mit Inertgas gewonnen flüssigen Fraktionen in einem geeignetem Verhältnis durchgeführt wird, wobei in solcher Weise die Getränke mit dem geforderten Gehalt von Alkohol und von den nichtflüssigen und flüssigen Stoffen gewonnen werden.

7. Verfahren, zur Produktion von Getränken mit verschiedenen Alkoholgehalten nach Anspruch 6, wobei das so gewonnene Getränk (19) ein nichtalkoholisches Getränk mit Alkoholgehalt unter 0,5 Vol.-%., oder ein nichtalkoholisches Getränk mit Alkoholgehalt unter 5 Vol.-%., oder ein nichtalkoholisches Getränk mit Alkoholgehalt unter 25 Vo).-%. oder ein nichtalkoholisches Getränk mit Alkoholgehalt über 25 Vol.-% ist.

## Revendications

1. Procédé de traitement de la matière du vin pour la préparation des boissons à teneur en alcool différente, **caractérisé en ce qu'**on combine une méthode de séparation par réfrigération (2) pour séparer des substances non-volatiles avec une méthode de désorption (7) par gaz inerte pour séparer des substances volatile aromatique et d'alcool de la matière première d'introduction du vin (1), successivement on effectue un mélange (10) des fractions obtenues pour gagner des boissons (19) à paramètres démandés en teneur en alcool et en teneurs en substances aromatiques non-volatiles et volatiles.

2. Procédé de préparation des boissons à teneur en alcool différente selon la ravendicatron **1, caractérisé en ce que** la méthode de réparation par réfrigération (2) se déroule à la température de -10 °C ou moins, en formant, de la matière première d'introduction du vin (1), un mélange de la fraction aqueuse glacée (4) en teneur en substances aromatiques non-volatiles réduite au-dessous de 30 % de teneur desdites substances dans la matière première du vin et une fraction en alcool aqueuse (5), qui est séparée par centrifugation, filtration ou par les autre techniques similaires (3).

3. Procédé de préparation des boissons à teneur en alcool différente selon la révendication 1, **caractérisé en ce que** la méthode de séparation par désorption (7) par gaz inerte se déroule à la température de 20 °C, en mettant le gaz inerte en contact avec le liquide d'introduction contenant jusqu'à 25 % en volume de l'alcool, à la fois, le liquide d'introduction étant une matière première d'introduction du vin (1) ou une fraction liquide d'alcool (5) sortant de la méthode de séparation par réfrigération (2).

4. Procédé de préparation des boissons à teneur en alcool différente selon la revendication 1 ou 2, **caractérisé en ce que** la méthode de séparation par réfrigération (2) consiste en réfrigération rapide en une étape jusqu'à la température finale de -10 °C ou moins, ou en réfrigération en équilibre, pendant laquelle la différence entre les températures du liquide et de la glace formée est maintenue à la valeur de 1 °C par refroidissement progressif du liquide basé sur le gradient de température d'environ -1 °C par heure jusqu'à la température finale de -10 °C ou moins.

5. Procédé de préparation des boissons à teneur en alcool différente selon la revendication 1 ou 3, **caractérisé en ce que** la méthode de désorption (7) par gaz inerte consiste en bouillonnement ou pulvérisation du liquide d'introduction (1,5) dans un courant de gaz pour former une fraction (9) de gaz inerte saturé de vapeurs des substances volatiles du liquide d'introduction (1,5), où lesdites substances volatiles sont les substance aromatiques, l'alcool et l'eau, et une fraction liquide (8), où pendant la condensation fractionnée subséquente la fraction (9) de gaz inerte saturé de vapeurs des substances volatiles est refroidie en plusieurs étapes (12, 15, 17) avec les températures différentes pour produire au moins deux fractions (11, 14, 16) avec les concentrations différentes de substances volatiles.

6. Procédé de préparation des boissons à teneur en alcool différente selon l'une quelconque des revendications 1 à 5, **caractérisé en ce que** le mélange (10) de fractions obtenues est effectué en mêlant le rapport approprié de fractions liquides obtenues par réfrigération (2) et désorption (7) par gaz inerte; on obtient ainsi des boissons à teneur en alcool demandée et en substances aromatiques non-volatiles et volatiles.

7. Procédé de préparation des boissons à teneur en alcool différente selon la revendication 6, où la boisson ainsi obtenue (19) est une boisson non alcoolisée à teneur en alcool au-dessous de 0,5 % en volume, ou une boisson peu alcoolisée à teneur on alcool au-dessous de 5 % en volume, ou une boisson alcoolisée à teneur en alcool au-dessous de 25 % en volume ou une boisson alcoolisée à teneur en alcool au-dessus de 25 % en volume.
